# EUROPEAN PATENT SPECIFICATION

(11) **EP 3 769 552 B1**
(45) Date of publication and mention of the grant of the patent: **13.11.2024**
(21) Application number: 19711375.6
(22) Date of filing: 21.03.2019
(51) Int. Cl.: H04W 8/24

(54) **METHOD AND SYSTEM FOR ENHANCING THE HANDLING OF CAPABILITIES OF A USER EQUIPMENT IN A MOBILE COMMUNICATION NETWORK**
VERFAHREN UND SYSTEM ZUR VERBESSERTEN LEISTUNGSHANDHABUNG EINES BENUTZERGERÄTS IN EINEM MOBILKOMMUNIKATIONSNETZWERK
PROCÉDÉ ET SYSTÈME POUR AMÉLIORER LA GESTION DE FONCTIONNALITÉS D'UN ÉQUIPEMENT UTILISATEUR DANS UN RÉSEAU DE COMMUNICATION MOBILE

(30) Priority: 23.03.2018 EP 18163804
(43) Date of publication of application: 27.01.2021
(73) Proprietor: Deutsche Telekom AG, 53113 Bonn (DE)
(72) Inventor: FOCK, Gunnar, 53227 Bonn (DE); KLATT, Axel, 50999 Köln (DE)
(74) Representative: Schwöbel, Thilo K.
(86) International application number: PCT/EP2019/057047
(87) International publication number: WO 2019/180117

(56) References cited:
- WO-A1-2014/163561
- WO-A1-2017/052346
- SAMSUNG: "Use of identifier representing NR UE capabilities, baseline", vol. RAN WG2, no. Athens, Greece; 20180226 - 20180302, 15 February 2018 (2018-02-15), XP051399667, Retrieved from the Internet <URL:http://www.3gpp.org/ftp/tsg%5Fran/WG2%5FRL2/TSGR2%5F101/Docs/> [retrieved on 20180215]
- LG ELECTRONICS INC: "NR UE Capability Size Reduction", vol. RAN WG2, no. Athens, Greece; 20180226 - 20180302, 14 February 2018 (2018-02-14), XP051399303, Retrieved from the Internet <URL:http://www.3gpp.org/ftp/tsg%5Fran/WG2%5FRL2/TSGR2%5F101/Docs/> [retrieved on 20180214]
- INTEL CORPORATION: "TP on UE capability", vol. RAN WG2, no. Reno, USA; 20171127 - 20171201, 2 December 2017 (2017-12-02), XP051372670, Retrieved from the Internet <URL:http://www.3gpp.org/ftp/tsg%5Fran/WG2%5FRL2/TSGR2%5F100/Docs/> [retrieved on 20171202]

## Description

### TECHNICAL FIELD

The present invention relates to a method for enhancing the handling of capabilities of a user equipment in a mobile communication network and/or for enhancing the set-up of communication services for a user equipment, wherein the mobile communication network comprises a radio access network comprising at least a base station entity, the base station entity serving a radio cell.

The present invention further relates to a system for enhancing the handling of capabilities of a user equipment in a mobile communication network and/or for enhancing the set-up of communication services for a user equipment, wherein the mobile communication network comprises a radio access network comprising at least a base station entity, the base station entity serving a radio cell.

Additionally, the present invention relates to a user equipment and a network entity for enhancing the handling of capabilities of the user equipment in a mobile communication network and/or for enhancing the set-up of communication services for a user equipment.

Furthermore, the present invention relates to a program comprising computer readable program code which, when executed on a user equipment causes the user equipment to perform the method.

Furthermore, the present invention relates to a computer readable storage medium comprising a program comprising a computer readable program code which, when executed on a user equipment causes the user equipment to perform the method.

### BACKGROUND

As the capabilities of user equipments (UEs) have drastically increased over time with the development of new functionalities used in mobile communication networks, the amount of data/information, representing the capabilities of a user equipment, has also increased significantly.

In current and future cellular systems like UMTS, LTE and NR/5G, devices (i.e. UEs) with multiple different properties need to be served by the cellular network, in particular by the radio access network (RAN). The device properties/capabilities are well defined in the related technology standards. However, the vendors of user equipments decide which particular capability/property is implemented in a particular device. In order to operate a UE in the cellular network, the network typically has to adapt to the properties/capabilities of the devices and can only use functions/services which are supported by the device.

Therefore, the device properties/capabilities are signaled from device to the network, especially following an UE Capability Enquiry message.

Over time, the amount of properties, i.e., number of properties, which need to be signaled has grown with the evolution of technology and the availability of multiple frequency bands and features, such that the sizes of messages, relating to the properties or capabilities of a user equipment, are hardly bearable in modern systems. The information transfer from the device to the network (e.g. the RAN) leads to significant overhead and delay. Typical device property reports quickly exceed 2 kByte of signaling data. With the advent of new technologies, e.g. New Radio (NR), and further improved device capabilities, the device capability information will quickly grow further. Moreover, whenever a network element is involved which has not yet received the device property/capability information, this information needs to be transferred over the radio interface or other interfaces inside the network.

Therefore, more efficient transmission and handling of these capabilities inside between the UE and the mobile communication network and also within the mobile communication network is needed.

The 3GPP draft R2-1802701 by LG Electronics Inc "NR UE Capability Size Reduction" teaches the transmitting of UE capabilities. In order to reduce the size of the capability reporting, the capability is sent based on index information. The index represents the whole of the UE's capability i.e. is reduced in size or compressed. The gNB i.e. the base station sends an index to the UE and the UE uses this to send a UE capability report in response to an enquiry from the gNB.

### SUMMARY

It is an object of the present invention to provide a method that enables a more efficient handling of capabilities of a user equipment.

The object of the present invention is achieved by a method for enhancing the handling of capabilities of a user equipment in a mobile communication network and/or for enhancing the set-up of communication services for a user equipment, wherein the mobile communication network comprises a radio access network comprising at least a base station entity, the base station entity serving a radio cell, wherein in order to allow the mobile communication network to set up communication services taking into account the capabilities of the user equipment, the method comprises the steps set out in independent claim 1.

According to the present invention, it is advantageously possible, by using a modifying function for generating the compact capability information, to minimize the data which is transmitted by a user equipment to the mobile communication network in order to make the mobile the mobile communication network aware of the properties/capabilities of the user equipment. Thereby, delay times can be reduced and signaling loads can be reduced. According to the present invention, it is possible for the mobile communication network to setup a communication service taking into account the capabilities of the user equipment after the mobile communication network (or at least a first network entity thereof) has received the compact capability information and has been informed about the capabilities of the user equipment.

According to the present invention, the first representation of the capability information, can, e.g., be understood as a standardized representation according to 3GPP TS 25.331 for UMTS, 3GPP TS 36.331 for LTE or 3GPP TS 38.331 for NR.

As a non-limiting example, according to an embodiment of the present invention, it is possible to reduce the transmitted data from multiple of kilobytes which are typically needed today to define the full set of UE capabilities on modern smartphones to 128 bits.

Embodiments of the present invention are described in the dependent claims.

According to an embodiment of the present invention, the modifying function comprises a hash function.

Thereby, it is advantageously possible according to the present invention that the compact capability information corresponds to or is the result of a hash function being applied to a first representation of a capability information (according to an ASN.1 notation).

According to an embodiment of the present invention, the compact capability information is generated during and/or prior to the first step by the user equipment, especially involving a processor of the user equipment.

Thereby, it is advantageously possible according to the present invention that the user equipment is configured to use the modifying function for generating the compact capability information.

According to an embodiment of the present invention, the first representation of the capability information corresponds to a binary or hexadecimal representation of the capability information.

Thereby, it is advantageously possible according to the present invention that, following the ASN.1 notation, each UE capability and related parameters for this capability are present, e.g., in a well-structured binary first representation of the ASN.1.

According to the state of the art, such a binary representation of the actual device capabilities is the information transmitted from a user equipment to the mobile communication network.

However, according to an embodiment of the present invention, the capability information of the user equipment is not transmitted in the binary first representation to the mobile communication network. Instead, a modifying function is used to modify the capability information in the first representation and thereby generate a compact capability information, which afterward is transmitted from the user equipment to a first network entity of the mobile communication network.

According to an embodiment of the present invention, after the second step, the compact capability information is cached in a cache of the first network entity, and/or the compact capability information is stored in a storage of the first network entity.

Thereby, it is advantageously possible according to an embodiment of the present invention, that the compact capability information is only indicated/transmitted to the first network element in case the network element does not have this information cached or stored.

According to an embodiment of the present invention, the compact capability information is transmitted to a central storage entity, especially being comprised in the radio access network, preferably after the second step, wherein the central storage entity stores the compact capability information, wherein the central storage entity comprises and/or is able to access a capability mapping table, wherein the capability mapping table comprises a list of possible user equipment capability configurations, wherein, by using the capability mapping table, the central storage entity is able to derive the capabilities of the user equipment from the compact capability information.

Thereby, it is advantageously possible according to an embodiment of the present invention that the mobile communication network comprises a central storage entity, which comprises a capability mapping table, i.e., a database which comprises information on possible user equipment capability configurations. By transmitting the compact capability information to this central storage entity, the central storage entity can associate the compact capability information (e.g., the hashed information) to the capability information of the user equipment, i.e., to the specific capability configuration of the user equipment. Thereby it is advantageously possible to employ the compact capability information as an identifier or index, which is easily generated by the user equipment itself (using the modifying function). This index/identifier (i.e., the compact capability information) can be used by the central storage entity with a database (i.e., the capability mapping table), comprising many (or all) possible user equipment capability configurations, for identifying the specific capabilities of the user equipment. According to an embodiment of the present invention, it is thereby possible that different user equipments, e.g., a first and a second user equipment, sharing the same capabilities (i.e., having an identical capability configuration) can be summarized in a group, having the same compact capability information.

It is especially possible that the compact capability information transmitted to the central storage entity by the first network entity.

Further it is advantageously possible according to an embodiment of the present invention, to use the compact capability information (e.g., the hashed representation of the capability information) not only for reconstructing the UE capabilities using the knowledge of the original UE capability information constructed from the well-defined ASN.1 definition in the cited standards, but also to use the hashed values as an (individual) identity information/identifier/index pointing to the specific set of capabilities of the user equipment.

According to an embodiment of the present invention, the compact capability information is only transmitted to the first network entity in the first step in case the first network entity is not already aware of the capabilities of the user equipment, wherein especially a request information, requesting information on the capabilities of the user equipment is received by the user equipment prior to the first step in case the first network entity is not already aware of the capabilities of the user equipment.

It is especially possible that the request information is transmitted from the first network entity or another network entity of the mobile communication network to the user equipment.

According to an embodiment of the present invention, the compact capability information is transmitted in the first step as part of a connection request message or connection setup complete message, especially as part of an RRCConnectionRequest message or an RRCConnectionSetupComplete message.

Thereby, it is advantageously possible according to an embodiment of the present invention to inform the first network entity (and especially the mobile communication network) very early during a connection setup and minimize a setup delay. Alternatively or additionally, it is possible that the user equipment transmits the compact capability information in response to a UE Capability Enquiry message received from (an entity of) the mobile communication network.

According to an embodiment of the present invention, a second network entity receives the compact capability information after the second step, especially from the first network entity.

Thereby, it is advantageously possible that different entities of the mobile communication network also employ the compact capability information for informing each other about the capabilities of the user equipment. Thereby, a particularly efficient method with greatly reduced signaling load can be achieved. In particular, it is thereby possible to transmit the compact capability information to all relevant network entities, relevant for providing a service to the user equipment, and inform them about the capabilities of the user equipment.

Furthermore, the present invention relates to a system for enhancing the handling of capabilities of a user equipment in a mobile communication network and/or for enhancing the set-up of communication services for a user equipment, wherein the mobile communication network comprises a radio access network comprising at least a base station entity, the base station entity serving a radio cell, wherein in order to allow the mobile communication network to set up communication services taking into account the capabilities of the user equipment, the system comprising the features of independent claim 10.

Furthermore, the present invention also relates to a user equipment for enhancing the handling of capabilities of the user equipment in a mobile communication network and/or for enhancing the set-up of communication services for a user equipment, wherein in order to allow the mobile communication network to set up communication services taking into account the capabilities of the user equipment as set out in independent claim 11.

Additionally, the present invention relates to a network entity as set out in claim 12.

Additionally, the present invention relates to programs each comprising computer readable program code as set out in independent claim 13.

Still additionally, the the present invention relates to computer readable storage media, each comprising a program comprising computer readable program code as set out in independent claim 14.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

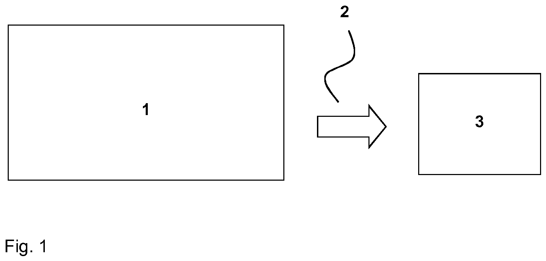

Figure 1 schematically illustrates a method according to an embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a method according to an embodiment of the present invention is schematically illustrated. In particular the process of modifying a first representation 1 of a capability information with a modifying function 2. The first representation 1 is ,e.g., a binary representation of the capability information according to the ASN.1 notation. By using the modifying function 2 on the first representation 1 of the capability information, a compact capability information 3 is obtained.

As an example, for LTE, the device capabilities are well defined in the specification (3GPP TS 36.306) and the related signaling is defined in 3GPP TS 36.331 using ASN.1 syntax notification language. Following the ASN.1 notation, each UE capability and related parameters for this capability result in a well-structured binary representation of the ASN.1. In methods and systems known from the state of the art, such a binary representation of the actual device capabilities is the data that is transferred between the device and the network.

By contrast, according to the present invention, a modifying function 2 for modifying the first representation 1 is used in order to obtain a compact capability information 3. This compact capability information 3 is transmitted from the user equipment to a first network entity of the mobile communication network. The first network entity can, e.g., be an entity of the access network of the mobile communication network.

In the following, a method according to an embodiment of the present invention is described based on the UE capability information of a modern smartphone.

From the ASN.1 definition [3GPP TS 36.331] the UE capability is defined as a DCCH-UL message ("UE_EUTRA_Capability"), e.g. as follows:

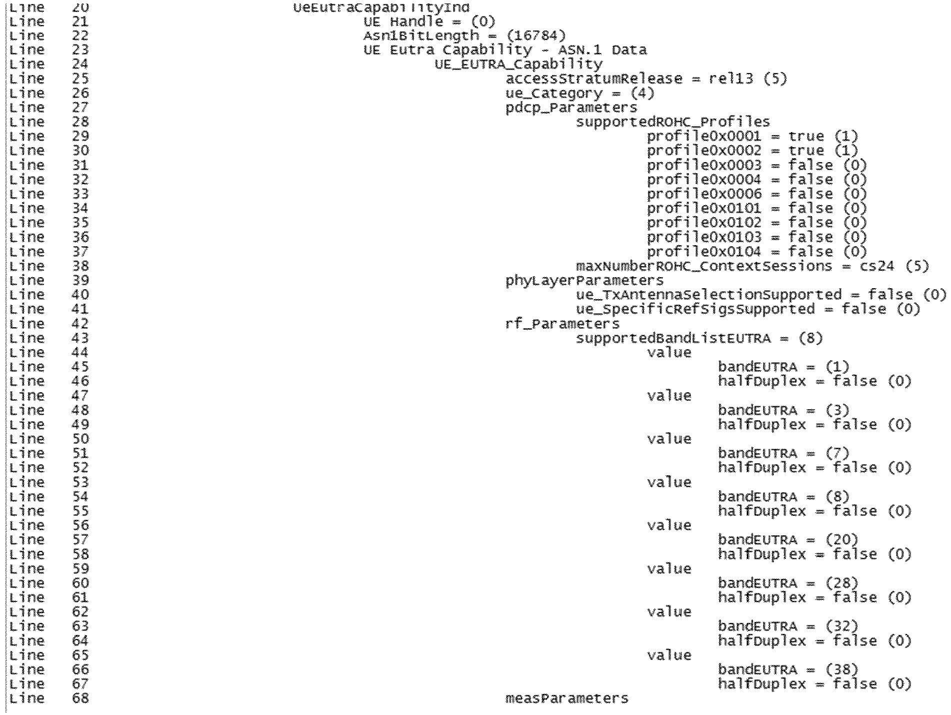

Conventionally, the result of such a UE capability information structure from the well-defined ASN.1 notation is an encoded RRC message which is typically represented in binary or hexadecimal representation.

According to the present invention, a binary first representation 1 of the capability information could, as a non-limiting example, look like a series of binary information composed of 1 and 0.

The following is an example used for illustration (and not a real capability information of a user equipment): binary representation <"UE capability bitstring"> (25 byte)
00010000 00001101 00100110 11001101 01001000 01011111 0100111000110110 00000100 10001110 11111010 10000001 11011100 01010001 00100110 11000011 11100101 10001100 01110101 10010100 10001001 01011101 11010100 10111000 00110011

In this example, this <"UE capability bitstring"> is the binary first representation 1 of the particular capability information (i.e., of the UE capability configuration).

According to the present invention, a modifying function 2, e.g., a hash function, is used on top of the <"UE capability bitstring">.

As a non-limiting example, a Message-Digest Algorithm 5 (MD5) hash function is used for illustration purposes in the following:

Original <"UE capability bitstring"> before using the MD5 hash function: 00010000 00001101 00100110 11001101 01001000 01011111 0100111000110110 00000100 10001110 11111010 10000001 11011100 01010001 00100110 11000011 11100101 10001100 01110101 10010100 10001001 01011101 11010100 10111000 00110011.

Using the MD5 hash function, the following compact capability information 3 is obtained: 4ce17a04fc13b26d 15681 bb6413c2ab6

Thereby, the calculated hash of the <"UE capability bitstring">, i.e., the compact capability information 3, represents exactly one set of UE capabilities (i.e., a specific capability configuration).

If only 1 bit is changed (e.g., because a particular UE capability is not supported by the specific user equipment) (1 -> 0) the resulting compact capability information 3 (using the same MD5 hash function) is completely different as exemplified below:

Changed <"UE capability bitstring"> before using the MD5 hash function: 00010000 00001101 00100110 11001100 01001000 01011111 0100111000110110 00000100 10001110 11111010 10000001 11011100 01010001 00100110 11000011 11100101 10001100 01110101 10010100 10001001 01011101 11010100 10111000 00110011.

Using the MD5 hash function, the following compact capability information 3 is obtained: a0f94d0d31 a4baad2e3765f06cec5d8c

Therein, the hash function can be used to generate an "individual fingerprint" of the set of UE capabilities (i.e., a first representation of specific capability information). It can further also be used for referencing to a set of individual UE capabilities.

In order to improve a connection set-up between the device and the network, it is advantageously possibly according to an embodiment of the present invention to cache and use the compact capability information 3 in network entities/elements as far as possible.

According to an embodiment of the present invention, it is possible to use a local storage in individual network elements respectively (e.g., in the first network entity). This may require a larger local storage or a frequent refresh of information.

According to an embodiment of the present invention, it is possible to implement a mix of a local storage and a more central storage entity to optimize performance and storage demand (requires definition of interfaces/messages).

According to an embodiment of the present invention, it is possible to use a central storage entity.

According to an embodiment of the present invention, it is possible to only indicate the compact capability information in case the network does not have this information cached (locally within the first network entity or within a central storage entity).

According to an embodiment of the present invention, further optimization is possible by addressing the stored the compact capability information 3 by use of an index value:

E.g., it is possible to use a temporary ID which uniquely identifies an individual UE within a resp. network element, such as a TMSI.

Furthermore, it is possible to use additional signaling/new ID assignment when properties/capabilities of the user equipment change.

It is possible to use a semi static ID which uniquely identifies a group of UEs with identical properties/capabilities. For example:
Group ID 1: {LIEID 1; UEID 3 - both with property set A}
Group ID 2: {UEID 2; UEID 5- both with property set B}
Group ID 3: {UEID 4- with property set C}

It is possible to use multiple semi static IDs required for different UE states in case that a user equipment dynamically changes properties. In this case, a central allocation scheme and database synchronization are required.

According to an embodiment of the present invention, it is possible to derive an index value/identifier from the compact capability information 3 or use the compact capability information 3 itself as an index/identifier. If the index value is unknown to the network element (e.g., to the first network entity), it will either query a more central database (e.g., a central storage entity) or request the user equipment to transmit the full (non-modified and non-hashed) UE properties/capabilities, e.g., in the first representation 1.

According to an embodiment of the present invention, further optimization of the capability handling can be achieved by transmitting the compact capability information 3 (or the index value) already in an early phase of the communication establishment procedure to minimize setup delays. E.g. the compact capability information 3 (or index value) may be transmitted within an RRCConnectionSetup or RRCConnectionSetupComplete message.

Furthermore, it is possible to employ an asymmetric encryption (over the index value/compact capability information 3 and a random seed), to improve the security.

Additionally, it is conceivable that additional collision handling is implemented, since employing a modifying function, such as a hashing function, may result in the risk of collisions. In case the first network entity (or the central storage entity) receives a compact capability information 3, which two (or more) sets of capabilities (i.e., capability configurations) are assigned to (e.g., within a capability mapping table), the first network entity or the central storage entity will trigger a resolution. During resolution, the compact capability information 3 will be modified and extended to more bits (e.g. by increasing from 32 from 64 bits; the collision risk per device type with 1 million device types changes from 1 :4000 to 1:1.8*10^13) by using a different hash function, such that a new compact capability information is generated. Furthermore, in a case a collision has occurred for a user equipment, the user equipment may store a collision state in an NV memory such that it can use the new compact capability information from this point on.

It is conceivable that signaling may allow the user equipment to use the (longer) new compact capability information already initially without further drawbacks (besides the additional bits).

Furthermore, according to an embodiment of the present invention, it is conceivable to partition the capabilities of a user equipment into static and dynamic properties. If a capability/property of a user equipment changes and hence the compact capability information 3 changes, this should not force the device to transmit the complete capabilities (or the entire compact capability information 3) but just the smaller delta, i.e., the changed capability/capabilities. However, after recombining the information, this needs to yield a consistent combined compact capability information on both, device and infrastructure side. There are two possible ways to achieve this:
a) Define combining rules which lead to a binary exact recombining result and perform the hash calculation on the result.
b) Calculate the hash over the delta and signal the resultant delta compact capability information (hash delta).

At least the following ways to calculate a hash that covers the combined capabilities/properties are possible such that the combined properties are still uniquely identified by the hash value (i.e., the combined compact capability information).

### H_base=Hash(Base)

A) Hash ( Combine ( Base , Delta))
B1) Hash ( concatenate (Base , Delta ))
B2) Hash ( concatenate (Hash(Base) , Delta ))= Hash ( concatenate (H_base , Delta ))
B3) Hash ( Base) XOR Hash (Delta) = H_base XOR Hash (Delta)

In all cases the properties need to be combined into a logically consistent set of properties as:

### Combine ( Base + Delta)

Therein, it can be ensured that the device and network work on the same set of properties/capabilities.

According to an embodiment of the present invention, with such a "delta approach", it is possible to avoid the transmission of the longer "Combine (Base, Delta)" and enable the transmission of the shorter "Delta" and still have a unique identification by the respective hash value.

## Claims

1. Method for enhancing the handling of capabilities of a user equipment in a mobile communication network and/or for enhancing the set-up of communication services for a user equipment, wherein the mobile communication network comprises a radio access network comprising at least a base station entity, the base station entity serving a radio cell, wherein in order to allow the mobile communication network to set up communication services taking into account the capabilities of the user equipment, the method is **characterized by** the following steps:
--- in a first step, the user equipment transmits a compact capability information (3), wherein the compact capability information (3) is generated by modifying a first representation (1) of a capability information according to an ASN.1 notation, using a modifying function (2), wherein the capability information corresponds to the capabilities of the user equipment, wherein the user equipment is able to dynamically change between different states with different capabilities, wherein the compact capability information (3) is related to a semi-static group identity, referencing or identifying a group of user equipments sharing identical capabilities, wherein different semi-static group identities are used for different states of the user equipment,
--- in a second step, after the first step, the compact capability information (3) is received by a first network entity of the mobile communication network,
wherein the first network entity comprises and/or is able to access a capability mapping table, wherein the capability mapping table comprises a list of possible user equipment capability configurations, wherein, by using the capability mapping table, the first network entity is able to derive the capabilities of the user equipment from the compact capability information (3).

2. Method according claim 1, wherein the modifying function (2) comprises a hash function.

3. Method according to one of the preceding claims, wherein the compact capability information (3) is generated during and/or prior to the first step by the user equipment, especially involving a processor of the user equipment.

4. Method according to any of the preceding claims, wherein the first representation (1) of the capability information corresponds to a binary or hexadecimal representation of the capability information.

5. Method according to any of the preceding claims, wherein after the second step, the compact capability information (3) is cached in a cache of the first network entity, and/or
the compact capability information (3) is stored in a storage of the first network entity.

6. Method according to any of the preceding claims, wherein the compact capability information (3) is transmitted to a central storage entity, especially being comprised in the radio access network, preferably after the second step, wherein the central storage entity stores the compact capability information (3), wherein the central storage entity comprises and/or is able to access a capability mapping table, wherein the capability mapping table comprises a list of possible user equipment capability configurations, wherein, by using the capability mapping table, the central storage entity is able to derive the capabilities of the user equipment from the compact capability information (3).

7. Method according to any of the preceding claims, wherein prior to the second step the first network entity is not aware of the capabilities of the user equipment and a request information, requesting information on the capabilities of the user equipment is received by the user equipment prior to the first step.

8. Method according to any of the preceding claims, wherein the compact capability information (3) is transmitted in the first step as part of a connection request message or connection setup complete message, especially as part of an RRCConnectionRequest message or an RRCConnectionSetupComplete message.

9. Method according to any of the preceding claims, wherein a second network entity receives the compact capability information (3) after the second step, especially from the first network entity.

10. System for enhancing the handling of capabilities of a user equipment in a mobile communication network and/or for enhancing the set-up of communication services for a user equipment, wherein the system comprises the user equipment and the mobile communication network, wherein the mobile communication network comprises a radio access network comprising at least a base station entity, the base station entity serving a radio cell, wherein in order to allow the mobile communication network to set up communication services taking into account the capabilities of the user equipment, the system is **characterized in that**:
--- the user equipment is configured to transmits a compact capability information (3), wherein the compact capability information (3) is generated by modifying a first representation (1) of a capability information according to an ASN.1 notation, using a modifying function (2), wherein the capability information corresponds to the capabilities of the user equipment, wherein the user equipment is configured to be able to dynamically change between different states with different capabilities, wherein the compact capability information (3) is related to a semi-static group identity, referencing or identifying a group of user equipments sharing identical capabilities, wherein the user equipment is configured to use different semi-static group identities for different states of the user equipment,
--- a first network entity of the mobile communication network is configured to receive the compact capability information (3),
wherein the first network entity comprises and/or is configured to be able to access a capability mapping table, wherein the capability mapping table comprises a list of possible user equipment capability configurations, wherein the first network entity is configured to derive the capabilities of the user equipment from the compact capability information (3) by using the capability mapping table.

11. User equipment for enhancing the handling of capabilities of the user equipment in a mobile communication network and/or for enhancing the set-up of communication services for a user equipment, wherein in order to allow the mobile communication network to set up communication services taking into account the capabilities of the user equipment the user equipment is configured to perform the first step of a method according to one of claims 1 to 9.

12. Network entity for enhancing the handling of capabilities of the user equipment in a mobile communication network and/or for enhancing the set-up of communication services for a user equipment, wherein in order to allow the mobile communication network comprising the network entity to set up communication services taking into account the capabilities of the user equipment the network entity is configured to perform the second step of a method according to one of claims 1 to 9

13. Programs, each comprising computer readable program code which, when executed on a user equipment and a network entity of a mobile communication network, causes the user equipment and the network entity of a mobile communication network to perform a method according to one of claims 1 to 9.

14. Computer readable storage media, each comprising a program comprising computer readable program code which, when executed on a user equipment and a network entity of a mobile communication network, causes the user equipment and the network entity of a mobile communication network to perform a method according to one of claims 1 to 9.

## Patentansprüche

1. Verfahren zum Verbessern der Handhabung von Fähigkeiten einer Benutzerausrüstung in einem Mobilkommunikationsnetz und/oder zum Verbessern der Einrichtung von Kommunikationsdiensten für eine Benutzerausrüstung, wobei das Mobilkommunikationsnetz ein Funkzugangsnetz umfasst, das mindestens eine Basisstationsentität umfasst, wobei die Basisstationsentität eine Funkzelle bedient, wobei das Verfahren, um es dem Mobilkommunikationsnetz zu erlauben, Kommunikationsdienste unter Berücksichtigung der Fähigkeiten der Benutzerausrüstung einzurichten, durch die folgenden Schritte gekennzeichnet ist:
- in einem ersten Schritt sendet die Benutzerausrüstung eine kompakte Fähigkeitsinformation (3), wobei die kompakte Fähigkeitsinformation (3) durch Modifizieren einer ersten Darstellung (1) einer Fähigkeitsinformation gemäß einer ASN.1-Notation unter Verwendung einer Modifizierungsfunktion (2) generiert wird, wobei die Fähigkeitsinformation den Fähigkeiten der Benutzerausrüstung entspricht, wobei die Benutzerausrüstung in der Lage ist, dynamisch zwischen verschiedenen Zuständen mit verschiedenen Fähigkeiten zu wechseln, wobei die kompakte Fähigkeitsinformation (3) zu einer semi-statischen Gruppenidentität in Beziehung steht, die eine Gruppe von Benutzerausrüstungen, die identische Fähigkeiten gemeinsam haben, referenziert oder identifiziert, wobei verschiedene semi-statische Gruppenidentitäten für verschiedene Zustände der Benutzerausrüstung verwendet werden,
- in einem zweiten Schritt, nach dem ersten Schritt, wird die kompakte Fähigkeitsinformation (3) durch eine erste Netzentität des Mobilkommunikationsnetzes empfangen, wobei die erste Netzentität eine Fähigkeitsabbildungstabelle umfasst und/oder auf eine Fähigkeitsabbildungstabelle zugreifen kann, wobei die Fähigkeitsabbildungstabelle eine Liste möglicher Benutzerausrüstungsfähigkeitskonfigurationen umfasst, wobei die erste Netzentität unter Verwendung der Fähigkeitsabbildungstabelle die Fähigkeiten der Benutzerausrüstung aus der kompakten Fähigkeitsinformation (3) herleiten kann.

2. Verfahren nach Anspruch 1, wobei die Modifizierungsfunktion (2) eine Hash-Funktion umfasst.

3. Verfahren nach einem der vorangehenden Ansprüche, wobei die kompakte Fähigkeitsinformation (3) während und/oder vor dem ersten Schritt durch die Benutzerausrüstung, insbesondere unter Einbeziehung eines Prozessors der Benutzerausrüstung, generiert wird.

4. Verfahren nach einem der vorangehenden Ansprüche, wobei die erste Darstellung (1) der Fähigkeitsinformation einer binären oder hexadezimalen Darstellung der Fähigkeitsinformation entspricht.

5. Verfahren nach einem der vorangehenden Ansprüche, wobei nach dem zweiten Schritt:
die kompakte Fähigkeitsinformation (3) in einem Cache der ersten Netzentität zwischengespeichert wird, und/oder die kompakte Fähigkeitsinformation (3) in einem Speicher der ersten Netzentität gespeichert wird.

6. Verfahren nach einem der vorangehenden Ansprüche, wobei die kompakte Fähigkeitsinformation (3) an eine zentrale Speicherentität, die insbesondere in dem Funkzugangsnetz enthalten ist, bevorzugt nach dem zweiten Schritt, gesendet wird, wobei die zentrale Speicherentität die kompakte Fähigkeitsinformation (3) speichert, wobei die zentrale Speicherentität eine Fähigkeitsabbildungstabelle umfasst und/oder auf eine Fähigkeitsabbildungstabelle zugreifen kann, wobei die Fähigkeitsabbildungstabelle eine Liste möglicher Benutzerausrüstungsfähigkeitskonfigurationen umfasst, wobei die zentrale Speicherentität unter Verwendung der Fähigkeitsabbildungstabelle die Fähigkeiten der Benutzerausrüstung aus der kompakten Fähigkeitsinformation (3) herleiten kann.

7. Verfahren nach einem der vorangehenden Ansprüche, wobei vor dem zweiten Schritt die erste Netzentität die Fähigkeiten der Benutzerausrüstung nicht kennt und eine Anforderungsinformation, die Informationen über die Fähigkeiten der Benutzerausrüstung anfordert, vor dem ersten Schritt durch die Benutzerausrüstung empfangen wird.

8. Verfahren nach einem der vorangehenden Ansprüche, wobei die kompakte Fähigkeitsinformation (3) in dem ersten Schritt als Teil einer Verbindungsanforderungsnachricht oder Verbindungsaufbau-vollendet-Nachricht, insbesondere als Teil einer RRCConnectionRequest-Nachricht oder einer RRCConnectionSetupComplete-Nachricht, gesendet wird.

9. Verfahren nach einem der vorangehenden Ansprüche, wobei eine zweite Netzentität die kompakte Fähigkeitsinformation (3) nach dem zweiten Schritt, insbesondere von der ersten Netzentität, empfängt.

10. System zum Verbessern der Handhabung von Fähigkeiten einer Benutzerausrüstung in einem Mobilkommunikationsnetz und/oder zum Verbessern der Einrichtung von Kommunikationsdiensten für eine Benutzerausrüstung, wobei das System die Benutzerausrüstung und das Mobilkommunikationsnetz umfasst, wobei das Mobilkommunikationsnetz ein Funkzugangsnetz umfasst, das mindestens eine Basisstationsentität umfasst, wobei die Basisstationsentität eine Funkzelle bedient, wobei das System, um es dem Mobilkommunikationsnetz zu erlauben, Kommunikationsdienste unter Berücksichtigung der Fähigkeiten der Benutzerausrüstung einzurichten, **dadurch gekennzeichnet ist, dass**:
- die Benutzerausrüstung dafür eingerichtet ist, eine kompakte Fähigkeitsinformation (3) zu senden, wobei die kompakte Fähigkeitsinformation (3) durch Modifizieren einer ersten Darstellung (1) einer Fähigkeitsinformation gemäß einer ASN.1-Notation unter Verwendung einer Modifizierungsfunktion (2) generiert wird, wobei die Fähigkeitsinformation den Fähigkeiten der Benutzerausrüstung entspricht, wobei die Benutzerausrüstung dafür eingerichtet ist, dynamisch zwischen verschiedenen Zuständen mit verschiedenen Fähigkeiten wechseln zu können, wobei die kompakte Fähigkeitsinformation (3) zu einer semi-statischen Gruppenidentität in Beziehung steht, die eine Gruppe von Benutzerausrüstungen, die identische Fähigkeiten gemeinsam haben, referenziert oder identifiziert, wobei die Benutzerausrüstung dafür eingerichtet ist, verschiedene semi-statische Gruppenidentitäten für verschiedene Zustände der Benutzerausrüstung zu verwenden,
- eine erste Netzentität des Mobilkommunikationsnetzes dafür eingerichtet ist, die kompakte Fähigkeitsinformation (3) zu empfangen,
wobei die erste Netzentität eine Fähigkeitsabbildungstabelle umfasst und/oder dafür eingerichtet ist, auf eine Fähigkeitsabbildungstabelle zugreifen zu können, wobei die Fähigkeitsabbildungstabelle eine Liste möglicher Benutzerausrüstungsfähigkeitskonfigurationen umfasst, wobei die erste Netzentität dafür eingerichtet ist, die Fähigkeiten der Benutzerausrüstung aus der kompakten Fähigkeitsinformation (3) unter Verwendung der Fähigkeitsabbildungstabelle herzuleiten.

11. Benutzerausrüstung zum Verbessern der Handhabung von Fähigkeiten der Benutzerausrüstung in einem Mobilkommunikationsnetz und/oder zum Verbessern der Einrichtung von Kommunikationsdiensten für eine Benutzerausrüstung, wobei die Benutzerausrüstung, um es dem Mobilkommunikationsnetz zu erlauben, Kommunikationsdienste unter Berücksichtigung der Fähigkeiten der Benutzerausrüstung einzurichten, dafür eingerichtet ist, den ersten Schritt eines Verfahrens nach einem der Ansprüche 1 bis 9 durchzuführen.

12. Netzentität zum Verbessern der Handhabung von Fähigkeiten der Benutzerausrüstung in einem Mobilkommunikationsnetz und/oder zum Verbessern der Einrichtung von Kommunikationsdiensten für eine Benutzerausrüstung, wobei die Netzentität, um es dem Mobilkommunikationsnetz, das die Netzentität umfasst, zu erlauben, Kommunikationsdienste unter Berücksichtigung der Fähigkeiten der Benutzerausrüstung einzurichten, dafür eingerichtet ist, den zweiten Schritt eines Verfahrens nach einem der Ansprüche 1 bis 9 durchzuführen.

13. Programme, umfassend jeweils computerlesbaren Programmcode, der, wenn er in einer Benutzerausrüstung und einer Netzentität eines Mobilkommunikationsnetzes ausgeführt wird, die Benutzerausrüstung und die Netzentität eines Mobilkommunikationsnetzes veranlasst, ein Verfahren nach einem der Ansprüche 1 bis 9 durchzuführen.

14. Computerlesbare Speichermedien, umfassend jeweils ein Programm, das computerlesbaren Programmcode umfasst, der, wenn er in einer Benutzerausrüstung und einer Netzentität eines Mobilkommunikationsnetzes ausgeführt wird, die Benutzerausrüstung und die Netzentität eines Mobilkommunikationsnetzes veranlasst, ein Verfahren nach einem der Ansprüche 1 bis 9 durchzuführen.

## Revendications

1. Procédé pour améliorer le traitement des capacités d'un équipement utilisateur dans un réseau de communication mobile et/ou pour améliorer l'établissement de services de communication pour un équipement utilisateur, dans lequel le réseau de communication mobile comprend un réseau d'accès radio comprenant au moins une entité de station de base, l'entité de station de base desservant une cellule radio, dans lequel, pour permettre au réseau de communication mobile d'établir des services de communication en tenant compte des capacités de l'équipement utilisateur, le procédé est **caractérisé par** les étapes suivantes :
- dans une première étape, l'équipement utilisateur transmet des informations de capacités compactes (3), dans lequel les informations de capacités compactes (3) sont générées par la modification d'une première représentation (1) d'informations de capacités selon une notation ASN.1, à l'aide d'une fonction de modification (2), dans lequel les informations de capacités correspondent aux capacités de l'équipement utilisateur, dans lequel l'équipement utilisateur peut basculer dynamiquement entre différents états avec des capacités différentes, dans lequel les informations de capacités compactes (3) sont liées à une identité de groupe semi-statique, référençant ou identifiant un groupe d'équipements utilisateur partageant des capacités identiques, dans lequel différentes identités de groupe semi-statiques sont utilisées pour différents états de l'équipement utilisateur,
- dans une seconde étape, après la première étape, les informations de capacités compactes (3) sont reçues par une première entité de réseau du réseau de communication mobile, dans lequel la première entité de réseau comprend et/ou peut accéder à une table de correspondance de capacités, dans lequel la table de correspondance de capacités comprend une liste de configurations possibles de capacités d'équipement utilisateur, dans lequel la première entité de réseau peut, à l'aide de la table de correspondance de capacités, déduire les capacités de l'équipement utilisateur à partir des informations de capacités compactes (3).

2. Procédé selon la revendication 1, dans lequel la fonction de modification (2) comprend une fonction de hachage.

3. Procédé selon l'une des revendications précédentes, dans lequel les informations de capacités compactes (3) sont générées pendant et/ou avant la première étape par l'équipement utilisateur, notamment en faisant intervenir un processeur de l'équipement utilisateur.

4. Procédé selon l'une quelconque des revendications précédentes, dans lequel la première représentation (1) des informations de capacités correspond à une représentation binaire ou hexadécimale des informations de capacités.

5. Procédé selon l'une quelconque des revendications précédentes, dans lequel, après la seconde étape, les informations de capacités compactes (3) sont mises en cache dans une mémoire cache de la première entité de réseau, et/ou
les informations de capacités compactes (3) sont stockées dans une mémoire de la première entité de réseau.

6. Procédé selon l'une quelconque des revendications précédentes, dans lequel les informations de capacités compactes (3) sont transmises à une entité de stockage centrale, notamment dans le réseau d'accès radio, de préférence après la seconde étape, dans lequel l'entité de stockage centrale stocke les informations de capacités compactes (3), dans lequel l'entité de stockage centrale comprend et/ou peut accéder à une table de correspondance de capacités, dans lequel la table de correspondance de capacités comprend une liste de configurations possibles de capacités d'équipement utilisateur, dans lequel, à l'aide de la table de correspondance de capacités, l'entité centrale de stockage est en mesure de déduire les capacités de l'équipement utilisateur à partir des informations de capacités compactes (3).

7. Procédé selon l'une quelconque des revendications précédentes, dans lequel avant la seconde étape, la première entité de réseau n'a pas connaissance des capacités de l'équipement utilisateur et des informations de demande, demandant des informations sur les capacités de l'équipement utilisateur, sont reçues par l'équipement utilisateur avant à la première étape.

8. Procédé selon l'une quelconque des revendications précédentes, dans lequel les informations de capacités compactes (3) sont transmises dans la première étape dans le cadre d'un message de demande de connexion ou d'un message d'établissement de connexion terminé, notamment dans le cadre d'un message RRCConnectionRequest ou d'un message RRCConnectionSetupComplete.

9. Procédé selon l'une quelconque des revendications précédentes, dans lequel une seconde entité de réseau reçoit les informations de capacités compactes (3) après la seconde étape, notamment à partir de la première entité de réseau.

10. Système pour améliorer la gestion des capacités d'un équipement utilisateur dans un réseau de communication mobile et/ou pour améliorer l'établissement de services de communication pour un équipement utilisateur, dans lequel le système comprend l'équipement utilisateur et le réseau de communication mobile, dans lequel le réseau de communication mobile comprend un réseau d'accès radio comprenant au moins une entité station de base, l'entité station de base desservant une cellule radio, dans lequel pour permettre au réseau de communication mobile d'établir des services de communication en tenant compte des capacités de l'équipement utilisateur, le système est **caractérisé en ce que** :
- l'équipement utilisateur est configuré pour transmettre des informations de capacités compactes (3), dans lequel les informations de capacités compactes (3) sont générées par la modification d'une première représentation (1) d'informations de capacités selon une notation ASN.1, à l'aide d'une fonction de modification (2), dans lequel les informations de capacités correspondent aux capacités de l'équipement utilisateur, dans lequel l'équipement utilisateur est configuré pour pouvoir basculer dynamiquement entre différents états avec des capacités différentes, dans lequel les informations de capacités compactes (3) sont liées à une identité de groupe semi-statique, référençant ou identifiant un groupe d'équipements utilisateur partageant des capacités identiques, dans lequel l'équipement utilisateur est configuré pour utiliser différentes identités de groupe semi-statiques pour différents états de l'équipement utilisateur,
- une première entité réseau du réseau de communication mobile est configurée pour recevoir les informations de capacités compactes (3),
dans lequel la première entité de réseau comprend et/ou est configurée pour pouvoir accéder à une table de correspondance de capacités, dans lequel la table de correspondance de capacités comprend une liste de configurations possibles de capacités d'équipement utilisateur, dans lequel la première entité de réseau est configurée pour déduire les capacités de l'équipement utilisateur à partir des informations de capacités compactes (3) à l'aide de la table de correspondance de capacités.

11. Équipement utilisateur pour améliorer la gestion des capacités de l'équipement utilisateur dans un réseau de communication mobile et/ou pour améliorer l'établissement de services de communication pour un équipement utilisateur, dans lequel, pour permettre au réseau de communication mobile d'établir des services de communication en tenant compte des capacités de l'équipement utilisateur, l'équipement utilisateur est configuré pour effectuer la première étape d'un procédé selon l'une des revendications 1 à 9.

12. Entité de réseau pour améliorer la gestion des capacités de l'équipement utilisateur dans un réseau de communication mobile et/ou pour améliorer l'établissement de services de communication pour un équipement utilisateur, dans lequel, pour permettre au réseau de communication mobile comprenant l'entité de réseau d'établir des services de communication en tenant compte des capacités de l'équipement utilisateur, l'entité de réseau est configurée pour effectuer la seconde étape d'un procédé selon l'une des revendications 1 à 9.

13. Programmes, comprenant chacun un code de programme lisible par ordinateur qui, lorsqu'il est exécuté sur un équipement utilisateur et une entité réseau d'un réseau de communication mobile, amène l'équipement utilisateur et l'entité de réseau d'un réseau de communication mobile à effectuer un procédé selon l'une des revendications 1 à 9.

14. Supports de stockage lisibles par ordinateur, comprenant chacun un programme comprenant un code de programme lisible par ordinateur qui, lorsqu'il est exécuté sur un équipement utilisateur et une entité de réseau d'un réseau de communication mobile, amène l'équipement utilisateur et l'entité de réseau d'un réseau de communication mobile à effectuer un procédé selon l'une des revendications 1 à 9.
